# EUROPEAN PATENT APPLICATION

(11) **EP 3 112 709 A1**
(43) Date of publication of application: **04.01.2017**
(21) Application number: 16177175.3
(22) Date of filing: 30.06.2016
(51) Int. Cl.: F16C 33/66, F16C 33/46, F16C 33/49, F16C 33/56

(54) **BEARING AND SPEED REDUCER**

(30) Priority: 03.07.2015 JP 2015134022
(71) Applicant: Nidec Shimpo Corporation, Nagaokakyo-city, Kyoto 617-0833 (JP)
(72) Inventor: Tsubone, Taihei, Nagaokakyo-city, Kyoto 617-0833 (JP)
(74) Representative: Stöckeler, Ferdinand

(57) **Abstract**

A bearing (1) includes a cylindrical inner race (10); a plurality of rollers (13) arranged along an outer circumferential surface of the inner race (10); and a first cage (11) arranged radially outside of the inner race (10) to hold the rollers (13) on an outer circumferential portion of the inner race (10). The first cage (11) includes a plurality of first columnar portions (110) each of which extends in an axial direction, and a first ring (111) arranged to join axially upper end portions of the first columnar portions (110) to one another. The inner race (10) and the first cage (11) are arranged to rotate relative to each other. Each roller (13) is arranged between adjacent ones of the first columnar portions (110). A portion of each roller (13) is arranged radially outward of the first columnar portions (110). A second cage (12) is arranged between the first ring (111) and the inner race (10) and between the first columnar portions (110) and the inner race (10). The second cage (12) is defined by a solid lubricant.

## Description

### BACKGROUND OF THE INVENTION

### 1. Field of the Invention

The present invention relates to a bearing and a speed reducer.

### 2. Description of the Related Art

In a known technique, a solid lubricant is used in a rolling-element bearing (hereinafter referred to simply as a bearing) that involves use of rolling elements, such as, for example, rollers. The solid lubricant is held inside the bearing to ensure lubricity for the rollers to reduce wear of the bearing caused by friction. To extend the life of the bearing, a technique for enabling the solid lubricant to be stably held inside the bearing for a long period while being in contact with the rollers is important. JP-A-2001-116053, for example, describes a method of arranging a solid lubricant inside a bearing and how the solid lubricant is arranged inside the bearing.

In the bearing described in JP-A-2001-116053, double-row raceway surfaces are defined in opposed surfaces of inner and outer races. Double-row spherical rollers held by a cage are interposed between the raceway surfaces. The solid lubricant is arranged between the inner and outer races in a full-pack fashion. In addition, an interior space of the bearing described in JP-A-2001-116053 is fully filled with an unburned lubricant in a substantially liquid state. The bearing is fixed on a burning plate, and is burned in an oven. The lubricant in a substantially liquid state is thus solidified.

### SUMMARY OF THE INVENTION

However, in the case where a solid lubricant is used in a bearing, it is necessary to feed a lubricant in a substantially liquid state into an interior space of the bearing. In addition, it is necessary to solidify the lubricant in a substantially liquid state through heat treatment. This results in a large number of processes and a long time required to manufacture the bearing. It is therefore desirable to simplify these processes to reduce a production cost of the bearing.

The present invention has been conceived to provide a structure of a bearing that makes it possible to easily manufacture the bearing and maintain lubricity for rollers for a long period.

A bearing according to a first preferred embodiment of the present invention includes a cylindrical inner race centered on a central axis extending in a vertical direction; a plurality of rollers arranged along an outer circumferential surface of the inner race; and a first cage arranged radially outside of the inner race to hold the rollers on an outer circumferential portion of the inner race. The first cage includes a plurality of first columnar portions each of which extends in an axial direction, and a first ring arranged to join axially upper end portions of the first columnar portions to one another. The inner race and the first cage are arranged to rotate relative to each other. Each of the rollers is arranged between adjacent ones of the first columnar portions. A portion of each roller is arranged radially outward of the first columnar portions. A second cage is arranged between the first ring and the inner race and between the first columnar portions and the inner race. The second cage is defined by a solid lubricant.

According to the first preferred embodiment of the present invention, the rollers are held on the outer circumferential portion of the inner race by the first cage and the second cage defined by the solid lubricant. This allows the rollers to be in contact with the solid lubricant to maintain lubricity even when the bearing is in operation. This leads to improved reliability of the bearing. In addition, because the solid lubricant is, as the second cage, incorporated in the bearing as a part thereof, manufacture of the bearing is made easier.

The above and other elements, features, steps, characteristics and advantages of the present invention will become more apparent from the following detailed description of the preferred embodiments with reference to the attached drawings.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
FIG. 1 is a vertical sectional view of a speed reducer according to a preferred embodiment of the present invention.
FIG. 2 is a horizontal sectional view of the speed reducer according to a preferred embodiment of the present invention.
FIG. 3 is a horizontal sectional view of a bearing according to a preferred embodiment of the present invention.
FIG. 4 is an exploded perspective view of the bearing according to a preferred embodiment of the present invention.
FIG. 5 is a partial sectional view of a pair of bearings in the speed reducer according to a preferred embodiment of the present invention.
FIG. 6 is a flowchart illustrating a procedure for manufacturing the bearing according to a preferred embodiment of the present invention.
FIG. 7 is a partial sectional view of a bearing according to a preferred embodiment of the present invention.

### DETAILED DESCRIPTION OF THE PREFERRED EMBODIMENTS

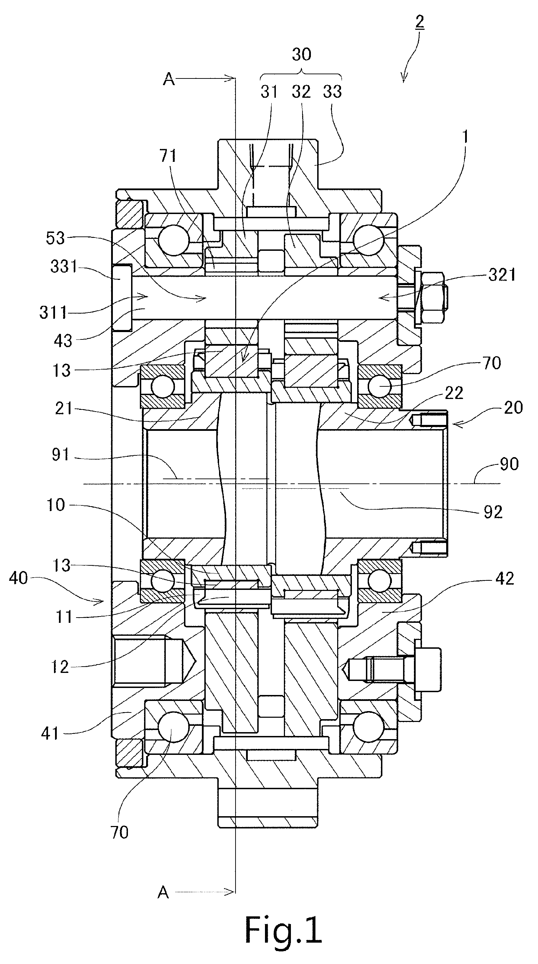

Hereinafter, preferred embodiments of the present invention will be described with reference to the accompanying drawings. It is assumed herein that a direction parallel to a central axis is referred to by the term "axial direction", "axial", or "axially", that directions perpendicular to the central axis are each referred to by the term "radial direction", "radial", or "radially", and that a direction along a circular arc centered on the central axis is referred to by the term "circumferential direction", "circumferential", or "circumferentially". Note, however, that the term "parallel" as used above includes "substantially parallel". Also note that the term "perpendicular" as used above includes "substantially perpendicular". In the following description, the right side and the left side in FIG. 1 will be referred to as an axially upper side and an axially lower side, respectively, for the sake of convenience in description. It should be noted, however, that the above definitions of the vertical direction and the upper and lower sides are not meant to restrict in any way the orientation of a bearing or a speed reducer according to any preferred embodiment of the present invention when in use.

### 1. First preferred embodiment

### 1-1. Overall structure of speed reducer

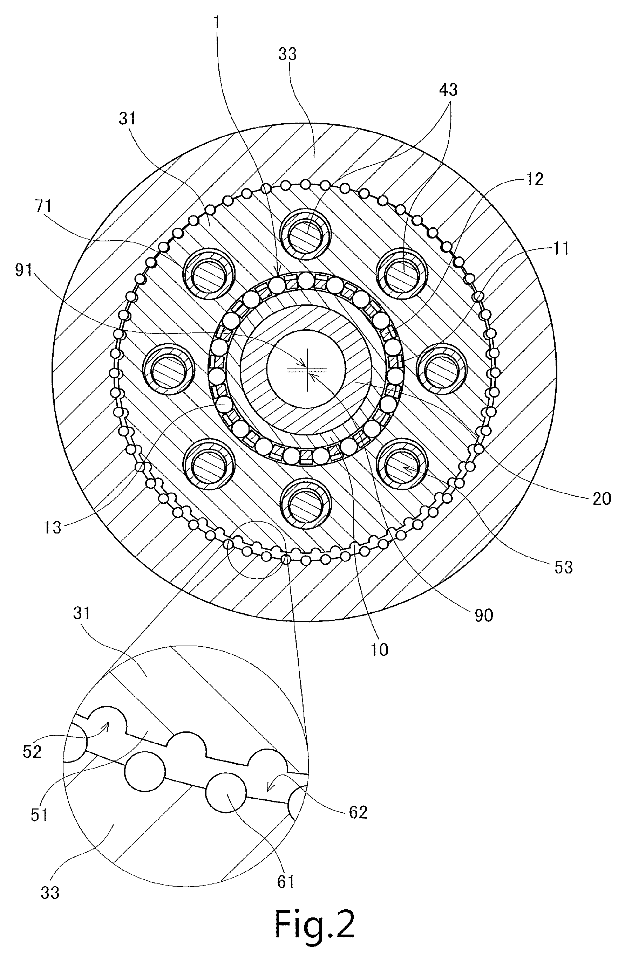

FIG. 1 is a vertical sectional view of a speed reducer 2 including a pair of bearings 1 according to a first preferred embodiment of the present invention taken along a plane including a rotation axis 90. FIG. 2 is a horizontal sectional view of the speed reducer 2 taken along line A-A in FIG. 1.

The speed reducer 2 is an inscribed planetary speed reducer that converts rotational motion at a first rotation rate to rotational motion at a second rotation rate lower than the first rotation rate. The speed reducer 2 is incorporated for use in, for example, a drive mechanism for a robot, a machine tool, an X-Y table, an apparatus for cutting a material, a conveyor line, a turntable, a roller, or the like. Note, however, that speed reducers according to other preferred embodiments of the present invention may be used for other purposes.

As illustrated in FIG. 1, the speed reducer 2 includes an input rotor 20, a speed reduction mechanism 30, and an output rotor 40. The bearings 1 according to the present preferred embodiment are included in the speed reduction mechanism 30.

The input rotor 20 is a member that rotates at the first rotation rate, which is a rotation rate inputted from the outside. In the present preferred embodiment, the input rotor 20 is a cylindrical member arranged to extend along the rotation axis 90. An axially upper end portion of the input rotor 20 is connected to a motor that serves as a driving source directly or through another power transmission mechanism. Once the motor is driven, the input rotor 20 starts rotating about the rotation axis 90 at the first rotation rate.

The input rotor 20 includes a first eccentric portion 21 and a second eccentric portion 22 arranged axially above the first eccentric portion 21. The first eccentric portion 21 includes a cylindrical outer circumferential surface that has, as a center, a first central axis 91 displaced from the rotation axis 90 and extending parallel to the rotation axis 90. The second eccentric portion 22 includes a cylindrical outer circumferential surface that has, as a center, a second central axis 92 displaced from the rotation axis 90 and extending parallel to the rotation axis 90. The first and second central axes 91 and 92 are arranged on opposite sides of the rotation axis 90. Once the input rotor 20 starts rotating, both the first and second central axes 91 and 92 start rotating about the rotation axis 90.

The speed reduction mechanism 30 is interposed between the input rotor 20 and the output rotor 40. The speed reduction mechanism 30 is a mechanism to reduce the speed of the rotational motion of the input rotor 20 and transmit resultant rotational motion to the output rotor 40. The speed reduction mechanism 30 according to the present preferred embodiment includes a first external gear 31, a second external gear 32, a frame 33, and the pair of bearings 1.

Each of the pair of bearings 1 is fitted to an outer circumferential portion of a separate one of the first and second eccentric portions 21 and 22. The first external gear 31 is fitted radially outside of the corresponding bearing 1 with rollers 13 therebetween. Accordingly, the first external gear 31 is supported to be rotatable about the first central axis 91 of the first eccentric portion 21. The second external gear 32 is fitted radially outside of the corresponding bearing 1 with rollers 13 therebetween. Accordingly, the second external gear 32 is supported to be rotatable about the second central axis 92 of the second eccentric portion 22.

As illustrated in an enlarged view in FIG. 2, the first external gear 31 includes a plurality of external teeth 51 projecting radially outward in an outer circumferential portion thereof. An external tooth space 52, which is recessed radially inward, is defined between adjacent ones of the external teeth 51. The external teeth 51 and the external tooth spaces 52 are arranged alternately in a circumferential direction about the first central axis 91. Similarly to the first external gear 31, the second external gear 32 includes a plurality of external teeth 51 and a plurality of external tooth spaces 52 in an outer circumferential portion thereof. More specifically, the second external gear 32 includes the external teeth 51 projecting radially outward in the outer circumferential portion thereof. The external tooth space 52, which is recessed radially inward, is defined between adjacent ones of the external teeth 51 in the second external gear 32. In the second external gear 32, the external teeth 51 and the external tooth spaces 52 are arranged alternately in the circumferential direction about the second central axis 92.

As illustrated in FIGs. 1 and 2, the first external gear 31 includes a plurality of insert holes 53. In the example of FIG. 2, the first external gear 31 includes eight insert holes 53. The insert holes 53 are arranged at regular intervals in the circumferential direction about the first central axis 91. Each insert hole 53 is arranged to pass through the first external gear 31 in an axial direction, radially inside of the external teeth 51 and the external tooth spaces 52. Similarly to the first external gear 31, the second external gear 32 includes a plurality of insert holes 53. In the second external gear 32, the insert holes 53 are arranged at regular intervals in the circumferential direction about the second central axis 92. In the second external gear 32, each insert hole 53 is arranged to pass through the second external gear 32 in the axial direction, radially inside of the external teeth 51 and the external tooth spaces 52.

The speed reduction mechanism 30 according to the present preferred embodiment includes the two external gears 31 and 32. Note, however, that the number of external gears may be one or more than two. In short, the number of external gears is at least one.

The frame 33 is a substantially cylindrical member, and is arranged to accommodate the input rotor 20, the output rotor 40, and the two external gears 31 and 32 therein. As illustrated in the enlarged view in FIG. 2, the frame 33 includes a plurality of internal teeth 61 projecting radially inward in an inner circumferential portion thereof. An internal tooth space 62, which is recessed radially outward, is defined between adjacent ones of the internal teeth 61. The internal teeth 61 and the internal tooth spaces 62 are arranged alternately in the circumferential direction about the rotation axis 90.

The external teeth 51 of each of the external gears 31 and 32 are arranged to mesh with the internal teeth 61 of the frame 33. Specifically, while the speed reducer 2 is in operation, the external gears 31 and 32 rotate such that the external teeth 51 of the external gears 31 and 32 sequentially fit in the internal tooth spaces 62 of the frame 33 and the internal teeth 61 of the frame 33 sequentially fit in the external tooth spaces 52 of the external gears 31 and 32. In the present preferred embodiment, the frame 33 thus serves as an internal gear. Note, however, that an internal gear separate from the frame 33 may alternatively be arranged on the inner circumferential portion of the frame 33.

Each of the first and second external gears 31 and 32 rotates by meshing with the internal teeth 61 of the frame 33 while revolving about the rotation axis 90 through power by the input rotor 20. Here, the number of internal teeth 61 of the frame 33 is greater than the number of external teeth 51 of each of the first and second external gears 31 and 32. Therefore, with each revolution of each of the external gears 31 and 32, the position of the external tooth 51 that meshes with the same internal tooth 61 of the frame 33 shifts. Thus, each of the first and second external gears 31 and 32 rotates at the second rotation rate lower than the first rotation rate in a direction opposite to the rotation direction of the input rotor 20. Accordingly, the position of each insert hole 53 of each of the external gears 31 and 32 also rotates at the second rotation rate.

The number of external teeth 51 of each of the first and second external gears 31 and 32 is assumed to be N. The number of internal teeth 61 of the frame 33 is assumed to be M. The reduction ratio P of the speed reduction mechanism 30 is given by P = (first rotation rate) / (second rotation rate) = N / (M - N). In the example of FIG. 2, N = 59 and M = 60, and therefore, the reduction ratio of the speed reduction mechanism 30 in this example is P = 59. That is, the second rotation rate is equal to 1/59 times the first rotation rate. Note, however, that the reduction ratio of a speed reduction mechanism according to another preferred embodiment of the present invention may have another value. Also note that each of the number N of external teeth 51 and the number M of internal teeth 61 may be any value, and is not limited in any particular manner. For example, the number N of external teeth 51 and the number M of internal teeth 61 may be 89 and 90, respectively, or the number N of external teeth 51 and the number M of internal teeth 61 may be 119 and 120, respectively. In other words, when N and M denote the number of external teeth 51 and the number of internal teeth 61 of the frame 33, respectively, any of the following combinations is preferable: N = 59 and M = 60, N = 89 and M = 90, and N = 119 and M = 120.

The output rotor 40 rotates about the rotation axis 90 at the second rotation rate, which results from the speed reduction. As illustrated in FIG. 1, the output rotor 40 according to the present preferred embodiment includes a first disk 41, a second disk 42, and a plurality of pins 43. In the present preferred embodiment, the number of pins 43 is eight.

The first disk 41 is a member in the shape of a circular ring, and is arranged to be perpendicular to the rotation axis 90. The first disk 41 is arranged axially below the first and second external gears 31 and 32. Ball bearings 70 are interposed between the first disk 41 and the input rotor 20, and between the first disk 41 and the frame 33. The first disk 41 is thus supported to be rotatable relative to both the frame 33 and the input rotor 20.

A plurality of press-fit holes 311 are defined in the first disk 41. In the present preferred embodiment, the number of press-fit holes 311 is eight. The pins 43 are press fitted into the press-fit holes 311. The press-fit holes 311 are arranged at regular intervals in the circumferential direction about the rotation axis 90.
Each press-fit hole 311 is arranged to pass through the first disk 41 in the axial direction.

The second disk 42 is a member in the shape of a circular ring, and is arranged to be perpendicular to the rotation axis 90. The second disk 42 is arranged axially above the first and second external gears 31 and 32. Ball bearings 70 are interposed between the second disk 42 and the input rotor 20, and between the second disk 42 and the frame 33. The second disk 42 is thus supported to be rotatable relative to both the frame 33 and the input rotor 20.

A plurality of fixing holes 321 are defined in the second disk 42. In the present preferred embodiment, the number of fixing holes 321 is eight. Axially upper end portions of the pins 43 are inserted into the fixing holes 321. The fixing holes 321 are arranged at regular intervals in the circumferential direction about the rotation axis 90. Each fixing hole 321 is arranged to pass through the second disk 42 in the axial direction.

Each of the pins 43 is a columnar member, and is arranged to couple the first and second disks 41 and 42 to each other. Each pin 43 is arranged to be substantially parallel to the rotation axis 90. The pins 43 are inserted through the insert holes 53 of the first and second external gears 31 and 32. The pins 43 are press fitted into the press-fit holes 311 of the first disk 41. A flange portion 331, which has an increased diameter, is defined at an axially lower end portion of each pin 43. An upper surface of the flange portion 331 is arranged to be in axial contact with the first disk 41. This prevents each pin 43 from coming off axially upward. The axially upper end portion of each pin 43 is inserted into the corresponding fixing hole 321 of the second disk 42, and is fixed to the second disk 42 through a nut.

As illustrated in FIG. 2, there is a gap between a surface defining each insert hole 53 and an outer circumferential surface of the corresponding pin 43. A bushing ring 71 in the shape of a circular ring is inserted in this gap. If each of the first and second external gears 31 and 32 rotates at the second rotation rate, which results from the speed reduction, power of the rotation is transmitted to each pin 43 through the bushing ring 71. As a result, the pins 43, the first disk 41, and the second disk 42 rotate about the rotation axis 90 at the second rotation rate.

### 1-2. Bearing structure

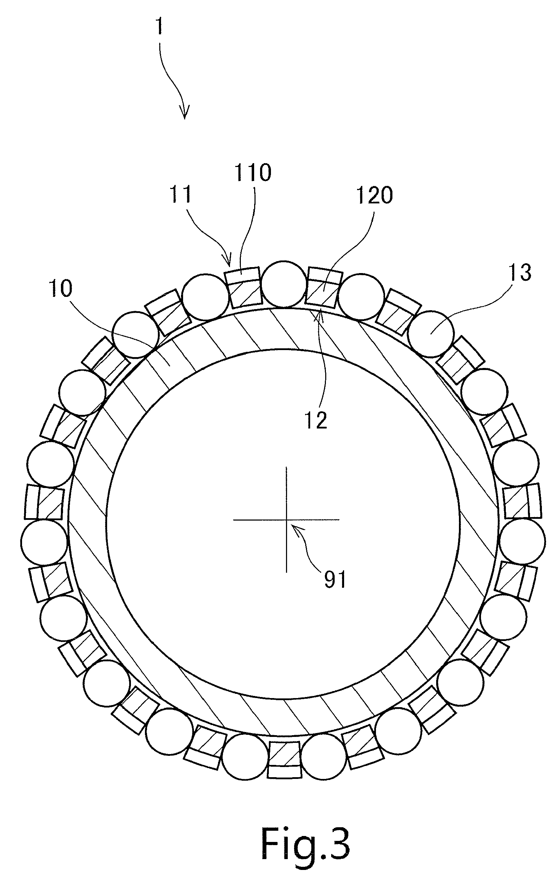

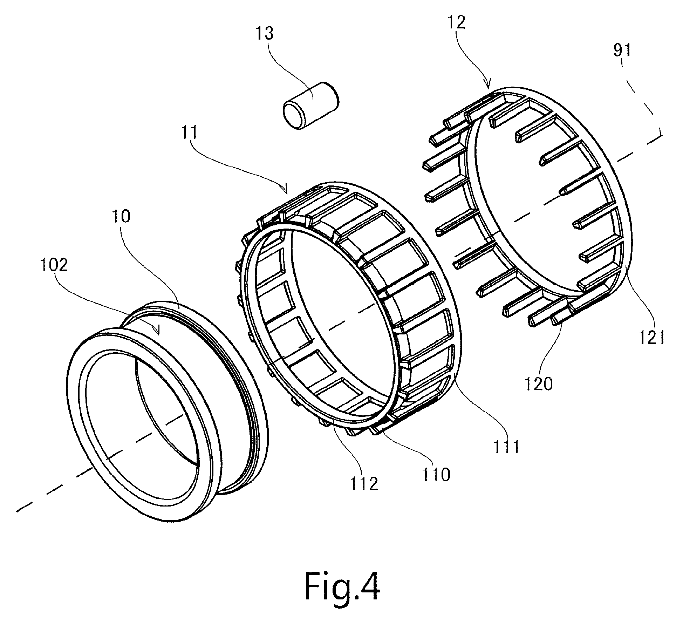

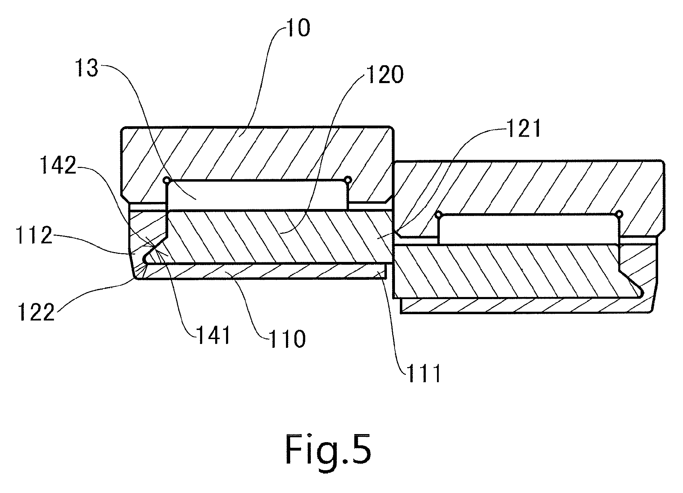

Next, the structure of each bearing 1 will now be described below. FIG. 3 is a sectional view of the bearing 1. FIG. 4 is an exploded perspective view of the bearing 1. FIG. 5 is a partial sectional view of the pair of bearings 1 in the speed reducer 2. Note that the axially upper side and the axially lower side will be mentioned with reference to the bearing 1 on the left in FIG. 5. Each bearing 1 includes an inner race 10, a first cage 11, a second cage 12, and the rollers 13.

The inner race 10 is arranged on an outer circumferential portion of the input rotor 20. The inner race 10 is a cylindrical member arranged to have the first central axis 91 as a center. Once the input rotor 20 starts rotating, the inner race 10 starts rotating about the rotation axis 90 of the input rotor 20. The inner race 10 includes a groove portion 102 defined in an outer circumferential surface thereof. The groove portion 102 is recessed in the shape of a circular ring, and extends in the circumferential direction. The rollers 13 are arranged in the groove portion 102. The rollers 13 are thus restrained from axial movement on the outer circumferential portion of the inner race 10. The rollers 13 are arranged to be in contact with an inner circumferential surface of the first external gear 31. In the present preferred embodiment, the number of rollers 13 of the bearing 1 is 19. Note, however, that the number of rollers 13 of the bearing 1 may alternatively be any number other than 19.

The first cage 11 is a casting obtained by molding a resin. In other words, the first cage 11 is made of a resin. The first cage 11 can be molded by, for example, injecting the resin in a substantially liquid state into a mold, and subjecting the mold to heat treatment. The first cage 11 is arranged radially outside of the inner race 10. The first cage 11 is arranged to rotate about the first central axis 91 relative to the inner race 10. In the present preferred embodiment, the first cage 11 includes a plurality of first columnar portions 110, each of which extends in the axial direction, and a first ring 111.

Each of the first columnar portions 110 is arranged to extend in the axial direction radially outside of the inner race 10. Axial end portions of the first columnar portions 110 are joined to one another through the first ring 111. Each of the rollers 13 is arranged between adjacent ones of the first columnar portions 110. A portion of each of the rollers 13 is arranged radially outward of the first columnar portions 110. Thus, each of the rollers 13 is held by the first columnar portions 110, and is restrained from circumferential movement on the outer circumferential portion of the inner race 10. In the present preferred embodiment, the number of first columnar portions 110 is 19. Note, however, that the number of first columnar portions 110 may alternatively be any number other than 19.

The second cage 12 is arranged between the first ring 111 and the inner race 10, and between the first columnar portions 110 and the inner race 10. The rollers 13 are held by the first and second cages 11 and 12 on the outer circumferential portion of the inner race 10. This allows the rollers 13 to be in contact with a solid lubricant and smoothly roll on the outer circumferential portion of the inner race 10. This leads to a reduction in friction accompanying the rolling of the rollers 13.
In addition, use of the solid lubricant prevents a leakage of a lubricant out of the bearing 1. This leads to maintaining lubricity during the operation of the bearing 1 for a long period, increasing reliability of the speed reducer.

The second cage 12 is a casting defined by molding the solid lubricant. The second cage 12 is molded by, for example, injecting a lubricant in a substantially liquid state into a mold, and subjecting the mold to heat treatment. Thus, the solid lubricant is incorporated in the bearing as a part thereof, i.e., the second cage, and this facilitates manufacture of the bearing. Moreover, the need for burning to form the solid lubricant when assembling the bearing is eliminated. This leads to a reduced number of processes in manufacturing the bearing 1, and a reduced production cost of the bearing.

In the present preferred embodiment, the second cage 12 includes an annular portion 121 and a plurality of second columnar portions 120, each of which extends in the axial direction from the annular portion 121. The annular portion 121 is in the shape of a circular ring. At least a portion of the annular portion 121 is arranged to intervene between the first ring 111 and the inner race 10. The second columnar portions 120 are arranged between the first columnar portions 110 and the inner race 10. The second cage 12 thus has the annular portion 121 at only one axial end of each of the second columnar portions 120, and this allows the mold with which to mold the second cage 12 to have a simple structure. This leads to a further reduction in the production cost of the bearing 1.

The first ring 111 is preferably arranged to have an inside radius greater than the distance between the first central axis 91 and a radially outer surface of each second columnar portion 120. This allows the second cage 12 to be inserted into a gap between the first cage 11 and the inner race 10 from one side in the axial direction. In addition, the annular portion 121 is preferably arranged to have an axial width greater than the axial width of the first ring 111. This makes it easier for each roller 13 to make contact with the solid lubricant. In the present preferred embodiment, the number of second columnar portions 120 is 19. Note, however, that the number of second columnar portions 120 may alternatively be any number other than 19 as long as it is equal to the number of first columnar portions 110.

As illustrated in FIG. 5, the pair of bearings 1 in the speed reducer 2 are arranged axially adjacent to each other. The annular portions 121 of the bearings 1 are arranged to face each other. This prevents the second cage 12 from coming off axially. This in turn strengthens the structure of the speed reducer 2.

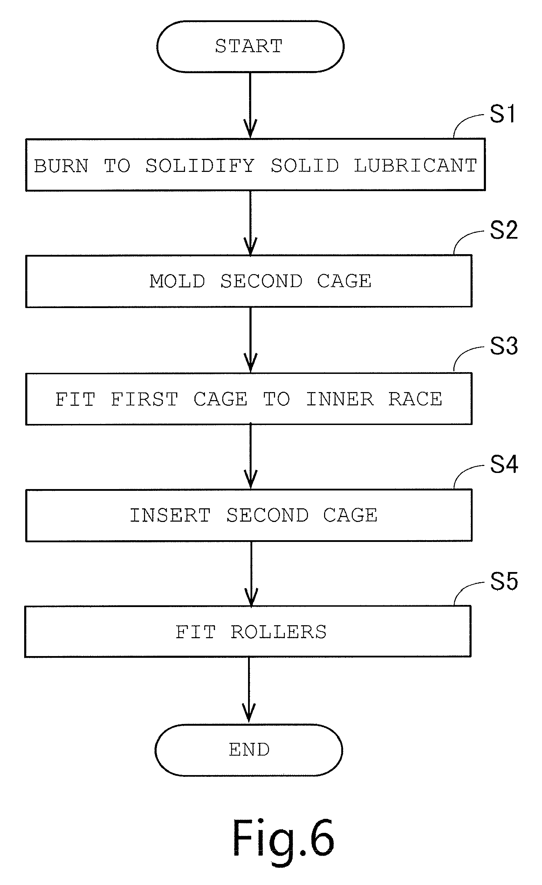

FIG. 6 is a flowchart illustrating an example procedure for manufacturing the bearing 1 according to the present preferred embodiment. When the bearing 1 is manufactured, the lubricant in a substantially liquid state is first injected into the mold. The mold is then subjected to the heat treatment to solidify the lubricant (S1). As a result, the second cage 12 defined by the solid lubricant is molded (S2). Next, the first cage 11 is fitted to the inner race 10 (S3). The second cage 12 is then inserted between the inner race 10 and the first cage 11 (S4). Thereafter, the rollers 13 are fitted between adjacent ones of the first columnar portions 110 (S5). The above procedure eliminates the need for a step of feeding a solid lubricant into the bearing 1 and a step of burning the bearing 1 to solidify the solid lubricant in the process of manufacturing the bearing 1. This leads to a reduced number of steps in the process of manufacturing the bearing 1, and a reduced production cost of the bearing 1. Note that the aforementioned heat treatment to which the mold is subjected includes burning and cooling.

In the present preferred embodiment, the first cage 11 further includes a second ring 112 in the shape of a circular ring. Axially lower end portions of the first columnar portions 110 are joined to one another through the second ring 112. This results in a firmer structure of the first cage 11. The first ring 111 is arranged to have an inside diameter greater than the inside diameter of the second ring 112. This allows a tip portion of each second columnar portion 120 to make contact with the second ring 112. This makes it easier to axially position the second cage 12 when inserting the second cage 12 between the first columnar portions 110 and the inner race 10. In addition, because axial movement of the second cage 12 is thus restrained, the structure of the bearing 1 is made firmer. The inside diameter of the first ring 111 is preferably greater than the outside diameter of the second ring 112. This makes it easier to produce the first cage 11 through the mold, resulting in a further reduction in the production cost of the bearing 1.

In the present preferred embodiment, the second ring 112, the annular portion 121, and each roller 13 are arranged to partially overlap with one another when viewed in the axial direction. That is, the rollers 13 are held axially between the second ring 112 and the annular portion 121. This allows the first cage 11, the second cage 12, and the rollers 13 to be restrained from axial movement relative to one another even if the groove portion 102 were not defined in the inner race 10. Therefore, regardless of whether the groove portion 102 is provided, an axial displacement of the first cage 11 can be prevented. In addition, the second ring 112 includes a recessed portion 122 arranged to define a radial gap between the second ring 112 and each first columnar portion 110. The tip portion of each second columnar portion 120 is fitted to the recessed portion 122. This allows each first columnar portion 110, the corresponding second columnar portion 120, and the second ring 112 to partially overlap with one another when viewed in a radial direction. This prevents friction during rotation of the rollers 13 from causing the second cage 12 to fall radially inward.

Note that the recessed portion 122 may include a first tapered portion 141 arranged to decrease the radial width of the radial gap in an axially downward direction. In other words, at least a portion of an inside surface of the recessed portion 122 may include at least one of an inclined surface and a curved surface. Further, the tip portion of each second columnar portion 120 may include a second tapered portion 142 having a radial width decreasing in the axially downward direction. In other words, the tip portion of each second columnar portion 120 may include at least one of an inclined surface and a curved surface. This makes it easier to hold the second cage 12 between the first cage 11 and the inner race 10. It is also made easier to insert the second cage 12 between the first cage 11 and the inner race 10.

### 2. Example modifications

While preferred embodiments of the present invention have been described above, it will be understood that the present invention is not limited to the above-described preferred embodiments.

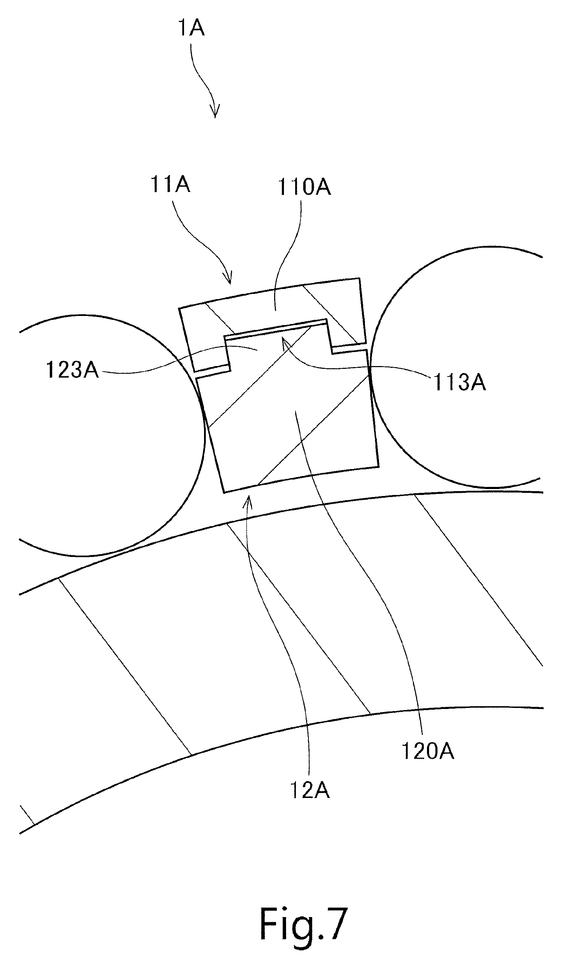

FIG. 7 is a partial sectional view of a bearing 1A according to a modification of the above-described preferred embodiment. In the modification illustrated in FIG. 7, a fitting groove 113A recessed radially outward is defined in a radially inner surface of a first columnar portion 110A of a first cage 11A. Meanwhile, a fitting projection 123A projecting radially outward is defined in a radially outer surface of a second columnar portion 120A of a second cage 12A. Each of the fitting groove 113A and the fitting projection 123A extends in the axial direction. At least a radially outer end of the fitting projection 123A is fitted in the fitting groove 113A. This allows the second cage 12A to be inserted axially into the first cage 11A with the second cage 12A being guided along the fitting grooves 113A in a process of manufacturing the bearing 1A. In addition, a circumferential displacement between the first and second cages 11A and 12A is unlikely to occur after the bearing 1A is manufactured.

Note that a fitting groove may be defined in a radially outer surface of a second columnar portion, and a fitting projection which is to bye fitted to the fitting groove may be defined in a radially inner surface of a first columnar portion.

High-strength metals, for example, may be used as materials of other members of the speed reducer than the first and second cages. Note, however, that the materials of those members are not necessarily limited to metals as long as the materials are capable of enduring a load of usage.

In the above-described preferred embodiment, the first cage is molded by injecting the resin in a substantially liquid state into the mold and subjecting the mold to the heat treatment. Note, however, that the first cage may alternatively be molded by another process, such as, for example, machine work.

In the above-described preferred embodiment, the first cage is made of the resin. Note, however, that the first cage may alternatively be made of any other desirable material that is capable of enduring a load when the bearing is in operation, such as, for example, a metallic material.

In the above-described preferred embodiment, the first cage includes the first columnar portions, the first ring, and the second ring. The first columnar portions, the first ring, and the second ring are molded as a single monolithic member. Note, however, that the first columnar portions, the first ring, and the second ring may alternatively be defined by separate members, and may be assembled separately as separate members.

In the above-described preferred embodiment, the inner race includes, in the outer circumferential surface thereof, the groove portion recessed in the shape of a circular ring and extending in the circumferential direction. The first cage includes the plurality of first columnar portions, the first ring, and the second ring. Note, however, that the inner race may not necessarily include the groove portion. In this case, the rollers may be held on the outer circumferential portion of the inner race by the first columnar portions, the first ring, and the second ring.

In the above-described preferred embodiment, the second cage is molded by injecting the lubricant in a substantially liquid state into the mold and subjecting the mold to the heat treatment. Note, however, that the second cage may alternatively be molded by another process, such as, for example, machine work. In this case, a solid lubricant previously subjected to thermal curing may be processed and shaped to include the annular portion and the second columnar portions.

In the above-described preferred embodiment, the bearing is manufactured according to the order of S1 to S5. Note, however, that the bearing may not necessarily be manufactured according to the above order. For example, the step (S4) of inserting the second cage between the inner race and the first cage and the step (S5) of fitting the rollers between the adjacent first columnar portions may be reversed in order. This allows the inner race, the first cage, and the rollers to be fitted together in advance. Then, the second cage previously molded can be inserted between the inner race and the first cage as necessary to manufacture the bearing.

Note that the detailed shape of each of the speed reducer and the bearing may be different from the shape thereof as illustrated in the accompanying drawings of the present application. Also note that features of the above-described preferred embodiments and the modifications thereof may be combined appropriately as long as no conflict arises.

Preferred embodiments of the present invention are applicable to, for example, bearings and speed reducers.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. A bearing (1) comprising:
a cylindrical inner race (10) centered on a central axis (91) extending in a vertical direction;
a plurality of rollers (13) arranged along an outer circumferential surface of the inner race (10); and
a first cage (11) arranged radially outside of the inner race (10) to hold the rollers (13) on an outer circumferential portion of the inner race (10); wherein
the first cage (11) includes:
a plurality of first columnar portions (110) each of which extends in an axial direction; and
a first ring (111) arranged to join axially upper end portions of the first columnar portions (110) to one another;
the inner race (10) and the first cage (11) are arranged to rotate relative to each other;
each of the rollers (13) is arranged between adjacent ones of the first columnar portions (110);
a portion of each roller (13) is arranged radially outward of the first columnar portions (110);
a second cage (12) is arranged between the first ring (111) and the inner race (10) and between the first columnar portions (110) and the inner race (10); and
the second cage (12) is defined by a solid lubricant.

2. The bearing (1) according to claim 1, wherein the second cage (12) is a casting defined by molding the solid lubricant.

3. The bearing (1) according to one of claims 1 and 2, wherein
the second cage (12) includes:
an annular portion (121) being in a shape of a circular ring; and
a plurality of second columnar portions (120) each of which extends in the axial direction from the annular portion (121);
the annular portion (121) is arranged between the first ring (111) and the inner race (10); and
the second columnar portions (120) are arranged between the first columnar portions (110) and the inner race (10).

4. The bearing (1) according to claim 3, wherein the first cage (11) further includes a second ring (112) arranged to join axially lower end portions of the first columnar portions (110) to one another;
the first ring (111) is arranged to have an inside diameter greater than an inside diameter of the second ring (112); and
each second columnar portion (120) includes a tip portion arranged to be in contact with the second ring (112).

5. The bearing (1) according to claim 4, wherein the first ring (111) is arranged to have an inside diameter greater than an outside diameter of the second ring (112).

6. The bearing (1) according to one of claims 3 and 4, wherein the first ring (111) is arranged to have an inside radius greater than a distance between the central axis and a radially outer surface of each second columnar portion (120).

7. The bearing (1) according to one of claims 3 and 4, wherein the annular portion (121) is arranged to have an axial width greater than an axial width of the first ring (111).

8. The bearing (1) according to claim 4, wherein
the second ring (112) includes a recessed portion (122) arranged to define a radial gap between the second ring (112) and a radially inner surface of each first columnar portion (110);
the tip portion of the second columnar portion (120) is fitted to the recessed portion (122); and
the first and second columnar portions (110) and (120) and the second ring (112) are arranged to partially overlap with one another when viewed in a radial direction.

9. The bearing (1) according to claim 8, wherein the recessed portion (122) includes a first tapered portion (141) arranged to decrease a radial width of the radial gap in an axially downward direction; and
the tip portion includes a second tapered portion (142) having a radial width decreasing in the axially downward direction.

10. A speed reducer (2) to reduce a rotation rate, comprising the bearing (1) according to any one of claims 1 to 9.

11. A speed reducer (2) to reduce a rotation rate, comprising a pair of bearings (1) according to anyone of claims 4 and 7 to 9, wherein the bearings (1) are arranged axially adjacent to each other with the annular portions (121) of the bearings (1) facing each other.
